# FASCICULE DE BREVET EUROPEEN

(11) **EP 3 710 302 B1**
(45) Date de publication et mention de la délivrance du brevet: **09.09.2026**
(21) Numéro de dépôt: 18807392.8
(22) Date de dépôt: 19.10.2018
(51) Int. Cl.: B60K 28/14, B60R 16/02

(54) **DISPOSITIF D'IMMOBILISATION D'UN VÉHICULE**
VORRICHTUNG ZUM IMMOBILISIERUNG EINES FAHRZEUGS
DEVICE FOR IMMOBILIZING A VEHICLE

(30) Priorité: 17.11.2017 FR 1771232
(43) Date de publication de la demande: 23.09.2020
(73) Titulaire: Estenne, Olivier, 92200 Neuilly-Sur-Seine (FR)
(72) Inventeur: Estenne, Olivier, 92200 Neuilly-Sur-Seine (FR)
(74) Mandataire: Hege, Frédéric
(86) Numéro de dépôt international: PCT/FR2018/000236
(87) Numéro de publication internationale: WO 2019/097125

(56) Documents cités:
- CA-A1- 2 122 514
- DE-A1- 3 108 503
- FR-A- 1 098 848
- GB-A- 1 088 808
- GB-A- 1 366 916
- GB-A- 1 406 451
- GB-A- 1 423 356
- US-A- 5 572 969

## Description

La présente invention se situe dans le domaine de la sécurité urbaine. Elle concerne plus particulièrement un dispositif d'immobilisation d'un véhicule permettant de limiter l'efficacité des attaques terroristes à la voiture bélier, et de rendre plus difficile le délit de fuite après un accident. Le dispositif pourra permettre en outre une information rapide des autorités en cas d'accident.

Les attaques terroristes constituent aujourd'hui un problème de société important. Les attaques dite « à la voiture bélier », en augmentation ces dernières années, sont particulièrement meurtrières. Ces attaques consistent, pour l'attaquant, à rouler avec un véhicule dans une zone piétonne, heurtant et écrasant les passants se présentant sur sa route. L'attaquant ne s'arrête habituellement que lorsqu'il y est forcé par un obstacle ou par l'intervention des forces de l'ordre.

Il n'existe aujourd'hui aucune solution satisfaisante permettant de lutter contre les attaques à la voiture bélier. Les principales mesures entreprises contre ce type d'attaque sont l'installation de plots de protection, ou encore la modification de plans de circulation. Ces mesures sont par définition limitées à certaines zones géographiques restreintes, et ne permettent pas de lutter efficacement contre le problème.

Le document GB1406451 propose un coupe-circuit pour véhicule, pouvant se déclencher après un choc pour prévenir les risques d'incendie. Cette solution pourrait convenir pour stopper une attaque à la voiture bélier après un premier choc. Cependant le redémarrage du véhicule se fait facilement par l'actionnement d'un levier, qui pourrait se trouver dans le poste de conduite, facilement accessible pour un conducteur. Cette solution n'est donc pas applicable à la lutte contre les attaques à la voiture bélier, pour laquelle il faut empêcher un redémarrage immédiat du véhicule après le premier choc.

La présente invention a pour objet de pallier au moins en partie à ces inconvénients en proposant un dispositif d'immobilisation de véhicule obligeant le véhicule à s'arrêter après un choc, le conducteur étant obligé de sortir du véhicule pour le redémarrer. A cet effet, elle propose un véhicule selon la revendication 1.

Grâce à ces dispositions, lors d'une attaque terroriste à la voiture bélier, le véhicule sera arrêté au premier choc, l'attaquant ne pouvant poursuivre l'attaque sans sortir du véhicule, ce qui permet aux forces de l'ordres de l'appréhender plus facilement. De même lors d'un accident, le risque de délit de fuite est réduit, le conducteur du véhicule ne pouvant pas immédiatement quitter les lieux après le choc.

Selon d'autres caractéristiques :
- ledit dispositif à actionnement manuel peut être disposé sous le capot avant du véhicule, ce qui constitue un mode de réalisation simple et efficace, cet espace n'étant habituellement pas accessible depuis l'habitacle du véhicule, et le dispositif à actionnement manuel ainsi que le coupe-circuit peuvent alors être placés près de la batterie du véhicule,
- ledit dispositif à actionnement manuel peut comporter au mois un socle, et une poignée mobile par rapport au socle, ce qui est un moyen simple de réaliser un actionnement de type mécanique,
- ledit au moins un détecteur d'impact peut être disposé sur un pare choc du véhicule, cet emplacement du véhicule subissant habituellement la plupart des chocs, les impacts seront détectés avec une probabilité élevée,
- ledit au moins un détecteur d'impact peut être un capteur de décélération et/ou un détecteur de choc, qui peut être de préférence placé à l'intérieur d'un boîtier inviolable, augmentant ainsi la sécurité du dispositif d'immobilisation,
- ledit dispositif d'immobilisation peut comporter en outre un actionneur de freinage, configuré pour actionner les freins du véhicule en cas d'activation du au moins un détecteur d'impact, ce qui permet d'immobiliser le véhicule plus rapidement et efficacement en cas d'impact,
- ledit dispositif d'immobilisation peut comporter en outre une balise GPS, ainsi qu'un émetteur, apte à envoyer une information vers un central de contrôle, afin que le central de contrôle puisse surveiller l'état du dispositif d'immobilisation, être alerté en cas d'activation du coupe-circuit, de panne ou de tentative de neutralisation du dispositif d'immobilisation, et soit capable si nécessaire de localiser le véhicule.

La présente invention concerne également une utilisation d'un dispositif d'immobilisation selon l'invention, dans lequel la neutralisation du coupe-circuit produise l'envoi d'une alerte vers ledit central de contrôle.

Grâce à ces dispositions, un véhicule 1 dont le système d'immobilisation n'est pas opérant est immédiatement repéré par le central de contrôle.

La présente invention concerne également une utilisation d'un dispositif d'immobilisation selon l'invention, dans lequel l'unité de contrôle est configurée pour être dans un état normalement actif, de sorte que le retrait ou la neutralisation d'au moins un équipement du dispositif d'immobilisation autre que le coupe-circuit produise l'activation du coupe-circuit.

Grâce à ces dispositions, un véhicule 1 dont le système d'immobilisation n'est pas opérant est immédiatement immobilisé.

La présente invention concerne également une utilisation d'un dispositif d'immobilisation selon l'invention, dans lequel l'actionnement du système de redémarrage impose au moins deux mouvements distincts de la poignée par rapport au socle.

Grâce à ces dispositions, le redémarrage du véhicule 1 n'est pas trop rapide, et il est plus difficile d'effectuer une modification non autorisée du dispositif d'immobilisation pour permettre un redémarrage depuis le poste de conduite.

La présente invention sera mieux comprise à la lecture de la description détaillée qui fait suite, en référence aux figures annexées dans lesquelles :

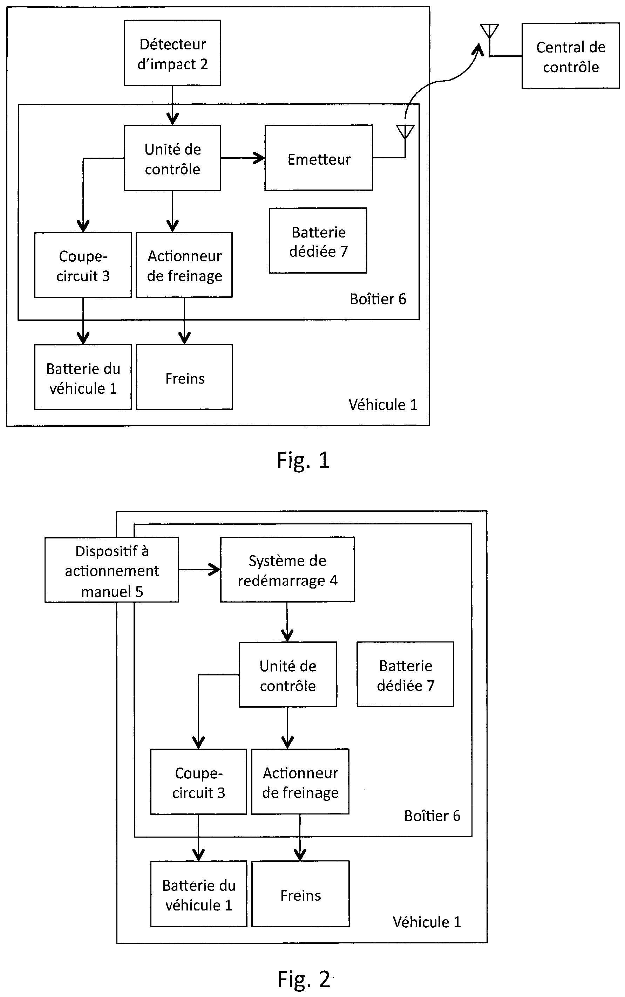

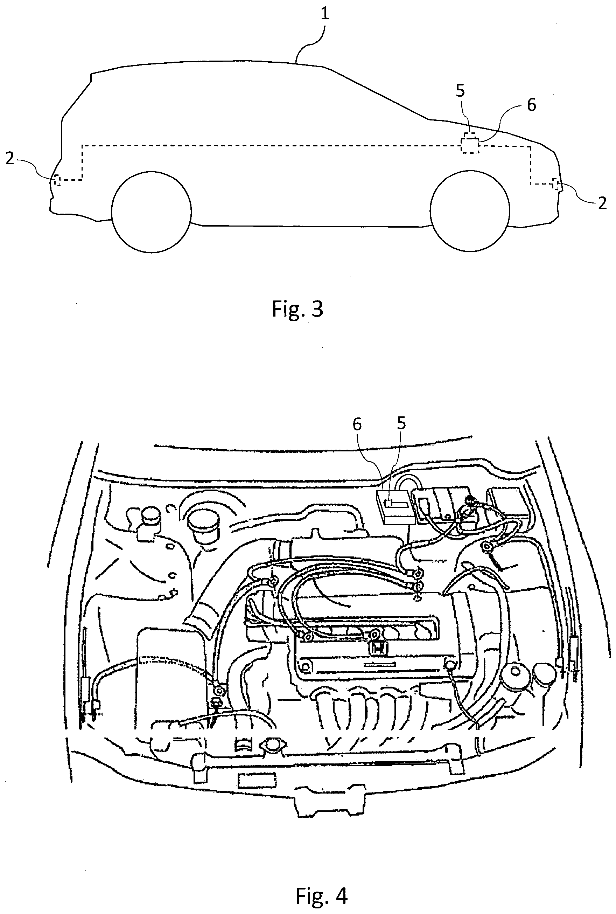

- la figure 1 est une vue schématique de côté d'un véhicule comportant un dispositif d'immobilisation selon un mode de réalisation de l'invention.
- La figure 2 est une vue d'un détail de la fig. 1.

L'invention porte sur un dispositif d'immobilisation disposé dans un véhicule 1. Le véhicule peut être n'importe quel véhicule à moteur utilisable pour une attaque à la voiture bélier, par exemple une voiture, une camionnette ou un camion. Le moteur peut être un moteur à explosion à essence ou diesel, au gaz, ou encore un moteur électrique.

Le dispositif d'immobilisation comporte un ou plusieurs détecteurs d'impact 2, qui peuvent être situés sur la carrosserie du véhicule 1. Les détecteurs d'impact 2 peuvent par exemple être partagés avec le système d'airbags, ou il peut encore s'agir de détecteurs dédiés. Les détecteurs 2 peuvent par exemple être placés sur les pare-chocs avant et arrière du véhicule 1. Les détecteurs d'impact 2 peuvent aussi être des capteurs de décélération et/ou détecteur de choc, par exemple disposés dans un boitier.

Le seuil de détection du choc peut être choisi inférieur au seuil utilisé par les airbags, car l'objectif est de détecter des chocs même de faible intensité. Le réglage du seuil doit être fait avec soin, pour éviter de déclencher le système de manière intempestive, par exemple pour un toucher lors d'un créneau, mais pour déclencher de manière certaine lors d'un choc pouvant occasionner une blessure d'un tiers.

Le dispositif d'immobilisation comporte une unité de contrôle, configurée pour recevoir une information de détection d'impact, et envoyer des ordres vers différentes sorties.

Le dispositif d'immobilisation comporte également un coupe-circuit 3. En cas de choc détecté par le détecteur d'impact 2, le coupe-circuit 3 est configuré pour immobiliser automatiquement le véhicule, par exemple en coupant le circuit électrique du véhicule 1 pour arrêter le moteur. La coupure peut par exemple s'effectuer directement sur la batterie du véhicule 1. Pour les véhicules à plusieurs moteurs, comme les véhicules hybrides, l'homme du métier saura adapter la solution pour permettre l'immobilisation du véhicule.

Le dispositif d'immobilisation peut comporter un actionneur de freinage, lui permettant d'agir sur les freins du véhicule 1 en plus du circuit électrique, afin d'immobiliser plus rapidement et efficacement le véhicule 1 après un choc.

Le dispositif d'immobilisation comporte encore un système de redémarrage manuel 4, permettant de rétablir le circuit électrique du véhicule 1 après sa coupure par l'action du coupe-circuit 3, et le cas échéant de libérer les freins, pour permettre la remise en route du véhicule 1. Le système de redémarrage 4 est placé dans le véhicule 1 de sorte à ce que le conducteur soit obligé de quitter son poste de conduite pour le mettre en œuvre manuellement, par l'intermédiaire d'un dispositif à actionnement manuel 5. Le système de redémarrage 4 peut par exemple être situé sous le capot moteur du véhicule 1, avantageusement à proximité de la batterie du véhicule 1.

Alternativement, le système de redémarrage 4 peut être placé dans le coffre, ou encore sous le coffre là où est habituellement placée une roue de secours. Il peut aussi être placé sous un siège arrière, ou sous le siège passager avant, d'une manière inaccessible à un conducteur installé au poste de conduite du véhicule.

Dans un mode préféré de réalisation de l'invention, le redémarrage du véhicule 1 par l'intermédiaire du système de redémarrage 4 nécessite une opération demandant un certain temps, comme par exemple une succession d'opérations manuelles. Le dispositif à actionnement manuel 5 peut par exemple comporter un socle, et une poignée mobile par rapport au socle. L'actionnement du système de redémarrage impose alors de préférence au moins deux mouvements distincts de la poignée par rapport au socle, par exemple une rotation dans un sens puis dans l'autre, ou une rotation jusqu'à ce qu'une translation soit possible, suivie d'une translation, ou encore une translation jusqu'à un point ou une rotation est possible, suivie d'une rotation. Finalement, on peut prévoir que ces opérations ne peuvent être effectuées que par un utilisateur autorisé, par exemple par l'usage d'une clef mécanique spécifique, d'un code ou d'une empreinte digitale.

On peut par exemple prévoir que le conducteur enregistre son empreinte digitale au moment de l'acquisition du véhicule 1 comportant le dispositif d'immobilisation, que ce soit en achat ou en location, afin que cette empreinte soit utilisée dans le dispositif à actionnement manuel 5. Dans un autre mode de réalisation de l'invention, le redémarrage peut être effectué par l'entrée d'un code dans le dispositif à actionnement manuel 5. Ce code peut être envoyé par le central de contrôle au conducteur, par exemple par SMS, sur requête du conducteur après immobilisation du véhicule. Dans les modes de réalisation pour lesquels une action du central de contrôle est nécessaire pour redémarrer le véhicule 1, on peut prévoir que cette action sera conditionnée par certains critères, par exemple une déclaration du conducteur sur les causes de l'activation du coupe-circuit 3.

Le dispositif d'immobilisation peut comporter une balise GPS, permettant à tout moment de localiser le véhicule 1. En cas de déclenchement du coupe-circuit 3, puis du système de redémarrage manuel 4, on peut ainsi prévoir que les informations de localisation du véhicule 1 soient transmises par l'intermédiaire d'un transmetteur sans-fil afin de localiser l'endroit du choc. Les informations peuvent par exemple être envoyées à un central de contrôle, qui en gère le traitement et le stockage. Si le véhicule 1 n'est pas redémarré rapidement par l'intermédiaire du système de redémarrage 4, il est probable qu'un accident grave ou un attentat ait eu lieu. Le central de contrôle peut alors en informer les forces de l'ordre ou de secours. La présence d'une balise GPS dans le dispositif d'immobilisation peut également être utilisée par le propriétaire d'un véhicule volé, par exemple par l'intermédiaire d'une application smartphone.

Le dispositif d'immobilisation peut comprendre un boîtier 6, dans lequel peuvent être placés l'unité de contrôle, une batterie dédiée 7, indépendante de la batterie du véhicule 1, le coupe-circuit 3, ainsi que le système de redémarrage 4, et éventuellement la balise GPS. Le boîtier 6 peut aussi comporter le détecteur d'impact par exemple sous forme de capteur de décélération et/ou de détecteur de choc. Le boîtier 6 est conçu afin que l'utilisateur du véhicule 1 ne puisse pas le retirer ou l'ouvrir sans autorisation. On peut prévoir que toute tentative de démontage du boîtier 6 non autorisée soit détectée par le dispositif d'immobilisation par exemple par un système de plombage, et qu'une alerte puisse alors être émise vers le central de contrôle. Il est alors aisé de repérer le véhicule 1, et de s'assurer qu'il n'est pas sur le point de servir de véhicule bélier.

Le système peut être normalement actif, et une alerte peut être envoyée pour toute neutralisation ou tentative de neutralisation du système vers le central de contrôle, que celle-ci soit due à une panne ou à une action volontaire. L'envoi d'alertes peut être combiné à l'activation du coupe-circuit 3, afin de rendre le véhicule 1 inutilisable sans un dispositif d'immobilisation opérant.

L'unité de contrôle peut gérer les interactions entre les détecteurs 2, le coupe-circuit 3 et le système de redémarrage manuel 4, ainsi qu'éventuellement la balise GPS, et l'envoi d'alertes au central de contrôle.

En cas d'attaque terroriste, le véhicule sera rapidement immobilisé après le premier choc, ce qui empêchera son conducteur d'effectuer une attaque à la voiture bélier sur une longue distance. En effet après un premier choc, le véhicule s'arrête forcément, avec ou sans blocage du frein. Le blocage des freins permet de l'arrêter plus rapidement, et de réduire encore les dégâts produits. Si l'attaquant veut remettre en route le véhicule, il est obligé de sortir du véhicule pour actionner le système de redémarrage manuel, ou si le système de redémarrage n'est pas à l'extérieur du véhicule, cela lui prendra un certain temps. Il est alors beaucoup plus vulnérable et plus facile à appréhender.

Dans un mode de réalisation particulier de l'invention, le dispositif d'immobilisation comporte un minuteur. On peut alors prévoir que le dispositif à actionnement manuel 4 ne puisse pas être utilisé immédiatement après l'action du coupe-circuit, mais seulement après un délai à définir, par exemple de l'ordre d'une minute. Ceci permet de prolonger le délai de remise en route du véhicule, et donc de réduire les possibilités de délit de fuite, ou de poursuite d'un attentat à la voiture bélier.

En cas d'accident grave, si les forces de l'ordre et les secours ne peuvent être appelés directement par le conducteur du véhicule 1 ou un témoin, l'envoi d'informations à un central de contrôle peut accélérer l'intervention des forces de l'ordre et des secours. Finalement, en cas d'accident, l'immobilisation du véhicule 1 permet de réduire le risque de délit de fuite, le conducteur du véhicule 1 étant forcé de sortir pour redémarrer.

Le dispositif d'immobilisation peut être installé sur un véhicule 1 existant, ou intégré à la fabrication de véhicules 1 neufs.

On peut prévoir d'attribuer à chaque dispositif d'immobilisation un numéro de série, et d'associer celui-ci au numéro de série du véhicule 1 sur lequel il est monté. Cela permet à une autorité de police de contrôler la mise en place des dispositifs d'immobilisation, et d'éviter un contournement de la réglementation avec des dispositifs non conformes, en particulier non actifs ou mal calibrés. Cela permet aussi un contrôle efficace de l'équipement d'un véhicule, en particulier lors des contrôles techniques obligatoires, mais aussi lors d'un simple contrôle de police.

Cela permet par ailleurs au central de contrôle, lorsqu'un dispositif d'immobilisation est actionné pour cause de choc ou volontairement neutralisé, de recevoir l'information du numéro de série du dispositif d'immobilisation neutralisé, et de pouvoir en déduire le numéro de série du véhicule concerné, et donc l'identité du propriétaire du véhicule concerné. En cas de voiture de location, cas très fréquent dans les attaques terroristes, cela permet d'identifier rapidement le preneur de la location. Cela permet d'accélérer l'enquête, et dans certains cas cela laisse même le temps d'agir pour éviter l'attaque.

Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Véhicule (1) muni d'un dispositif d'immobilisation comportant au moins un détecteur d'impact (2), au moins un coupe-circuit (3) configuré apte à arrêter le moteur du véhicule (1), un système de redémarrage (4) configuré pour désactiver le coupe-circuit (3) et permettre la remise en route du véhicule, et une unité de contrôle, **caractérisé en ce que** ledit système de redémarrage (4) comporte un dispositif à actionnement manuel (5), conditionnant le redémarrage, ledit dispositif à actionnement manuel (5) étant disposé sous le capot moteur du véhicule 1, ou dans le coffre, ou encore sous le coffre là où est habituellement placée une roue de secours ou sous un siège arrière, ou sous le siège passager avant, d'une manière inaccessible à un conducteur installé au poste de conduite du véhicule (1).

2. Véhicule (1) selon la revendication précédente, dans lequel ledit dispositif à actionnement manuel (5) est disposé sous le capot avant du véhicule (1).

3. Véhicule (1) selon l'une des revendications précédentes, dans lequel ledit dispositif à actionnement manuel (5) comporte au mois un socle, et une poignée mobile par rapport au socle.

4. Véhicule (1) selon l'une des revendications précédentes, dans lequel ledit au moins un détecteur d'impact (2) est disposé sur un pare choc du véhicule (1).

5. Véhicule (1) selon l'une des revendications 1 à 3, dans lequel ledit au moins un détecteur d'impact (2) est un capteur de décélération et/ou un détecteur de choc placé à l'intérieur d'un boîtier, de préférence un boîtier inviolable.

6. Véhicule (1) selon l'une des revendications précédentes, comportant en outre un actionneur de freinage, configuré pour actionner les freins du véhicule (1) en cas d'activation du au moins un détecteur d'impact (2).

7. Véhicule (1) selon l'une des revendications précédentes, comportant en outre une balise GPS, ainsi qu'un émetteur, apte à envoyer une information vers un central de contrôle.

8. Utilisation d'un véhicule (1) selon la revendication précédente, dans lequel la neutralisation du coupe-circuit (3) produise l'envoi d'une alerte vers ledit central de contrôle.

9. Utilisation d'un véhicule (1) selon l'une des revendications 1 à 7, dans lequel l'unité de contrôle est configurée pour être dans un état normalement actif, de sorte que le retrait ou la neutralisation d'au moins un équipement du dispositif d'immobilisation autre que le coupe-circuit (3) produise l'activation du coupe-circuit.

10. Utilisation d'un véhicule (1) selon la revendication 3 ou selon l'une des revendications 4 à 7 en ce qu'elles dépendent de la revendication 3, dans lequel l'actionnement du système de redémarrage (4) impose au moins deux mouvements distincts de la poignée par rapport au socle.

## Patentansprüche

1. Fahrzeug (1), das mit einer Wegfahrsperre ausgestattet ist, die mindestens einen Aufprallsensor (2), mindestens einen Unterbrecher (3), der so ausgelegt ist, dass er den Motor des Fahrzeugs (1) abschaltet, einem Neustartsystem (4), das so ausgelegt ist, dass es den Stromunterbrecher (3) deaktiviert und das erneute Starten des Fahrzeugs ermöglicht, sowie einer Steuereinheit, **dadurch gekennzeichnet, dass** das genannte Neustartsystem (4) eine manuell betätigbare Vorrichtung (5) umfasst, die das Wiederanfahren bedingt, wobei die manuell betätigbare Vorrichtung (5) unter der Motorhaube des Fahrzeugs (1), im Kofferraum, unter dem Kofferraum an der Stelle, an der üblicherweise ein Ersatzrad untergebracht ist, unter einem Rücksitz oder unter dem Beifahrersitz so angeordnet ist, dass sie für einen Fahrer, der auf dem Fahrersitz des Fahrzeugs (1) sitzt, unzugänglich ist.

2. Fahrzeug (1) nach dem vorstehenden Anspruch, wobei die manuell betätigbare Vorrichtung (5) unter der Motorhaube des Fahrzeugs (1) angeordnet ist.

3. Fahrzeug (1) nach einem der vorstehenden Ansprüche, wobei die manuell betätigbare Vorrichtung (5) mindestens einen Sockel und einen relativ zum Sockel beweglichen Griff umfasst.

4. Fahrzeug (1) nach einem der vorstehenden Ansprüche, wobei der mindestens eine Aufprallsensor (2) an einer Stoßstange des Fahrzeugs (1) angeordnet ist.

5. Fahrzeug (1) nach einem der Ansprüche 1 bis 3, wobei der mindestens eine Aufprallsensor (2) ein Verzögerungssensor und/oder ein Stoßsensor ist, der in einem Gehäuse, vorzugsweise einem manipulationssicheren Gehäuse, untergebracht ist.

6. Fahrzeug (1) nach einem der vorstehenden Ansprüche, das ferner einen Bremsaktuator umfasst, der so ausgelegt ist, dass er bei Auslösung des mindestens einen Aufprallsensors (2) die Bremsen des Fahrzeugs (1) betätigt.

7. Fahrzeug (1) nach einem der vorstehenden Ansprüche, das ferner eine GPS-Sendeeinheit sowie einen Sender umfasst, der dazu ausgelegt ist, Informationen an eine Leitstelle zu senden.

8. Verwendung eines Fahrzeugs (1) nach dem vorstehenden Anspruch, bei der die Überbrückung des Unterbrechers (3) das Senden eines Alarms an die genannte Leitstelle bewirkt.

9. Verwendung eines Fahrzeugs (1) gemäß einem der Ansprüche 1 bis 7, bei dem die Steuereinheit so konfiguriert ist, dass sie sich in einem normalerweise aktiven Zustand befindet, sodass das Entfernen oder die Deaktivierung mindestens einer Komponente der Wegfahrsperre, die nicht der Unterbrecher (3) ist, die Aktivierung des Unterbrechers bewirkt.

10. Verwendung eines Fahrzeugs (1) gemäß Anspruch 3 oder gemäß einem der Ansprüche 4 bis 7, soweit diese von Anspruch 3 abhängen, wobei die Betätigung des Wiederanfahrsystems (4) mindestens zwei unterschiedliche Bewegungen des Griffs relativ zum Sockel erfordert.

## Claims

1. Vehicle with an immobilization device (1) comprising at least one impact sensor (2), at least one circuit breaker (3) configured able to stop the engine of the vehicle (1), a restart system (4) configured to deactivate the circuit breaker (3) and allow the vehicle to be restarted, and a control unit, **characterized in that** the restart system (4) comprises a manually operable device (5) conditioning the restarting, said manually operable device (5) being arranged under the bonnet of vehicle 1, or in the boot, or under the boot where a spare wheel is usually kept, or under a rear seat, or under the front passenger seat, in a way inaccessible to a driver who is in the vehicle's driver's station.

2. Vehicle (1) according to the previous claim, in which the manually operable device (5) is arranged under the front bonnet of the vehicle (1).

3. Vehicle (1) according to one of the previous claims, in which said manually operable device (5) comprises at least one base, and a handle which is movable relative to the base.

4. Vehicle (1) according to one of the previous claims, in which said at least one impact sensor (2) is arranged on a bumper of the vehicle (1).

5. Vehicle (1) according to one of claims 1 to 3, wherein the at least one impact sensor (2) is a deceleration sensor and/or an bump sensor placed inside a housing, preferably a tamper-proof housing.

6. Vehicle (1) according to one of the previous claims, further comprising a brake actuator configured to actuate the vehicle brakes (1) in the event of activation of the at least one impact sensor (2).

7. Vehicle (1) according to one of the previous claims, further comprising a GPS beacon, as well as a transmitter, capable of sending information to a control center.

8. Use of a vehicle (1) according to the previous claim, in which the neutralization of the circuit breaker (3) produces the sending of an alert to said control center.

9. Use of a vehicle (1) according to one of claims 1 to 7, in which the control unit is configured to be in a normally active state, such that removal or neutralization of at least one piece of equipment of the immobilization device other than the circuit breaker (3) produces activation of the circuit breaker.

10. Use of a vehicle (1) according to claim 3 or according to one of claims 4 to 7 in that they depend on claim 3, wherein the actuation of the restart system (4) requires at least two separate movements of the handle relative to the base.
